Europäisches Patentamt

European Patent Office

Office européen des brevets

(11) Veröffentlichungsnummer : **0 037 463**
**B1**

(12) **EUROPÄISCHE PATENTSCHRIFT**

(45) Veröffentlichungstag der Patentschrift :
05.06.85

(21) Anmeldenummer : **81101622.9**

(22) Anmeldetag : **06.03.81**

(51) Int. Cl.⁴ : **C 08 F283/00, C 08 F299/04,
C 08 G 63/66, C 09 D 3/00**

(54) **Photopolymerisierbare Polyesterharze, Verfahren zu ihrer Herstellung und ihre Verwendung als Lackbindemittel.**

(30) Priorität : **19.03.80 DE 3010428**

(43) Veröffentlichungstag der Anmeldung :
**14.10.81 Patentblatt 81/41**

(45) Bekanntmachung des Hinweises auf die Patenterteilung : **05.06.85 Patentblatt 85/23**

(84) Benannte Vertragsstaaten :
**AT DE FR GB IT**

(56) Entgegenhaltungen :
**DE-A- 1 024 654
DE-A- 1 054 620
DE-A- 2 113 998
FR-A- 1 117 712
GB-A- 1 131 617**

(73) Patentinhaber : **BAYER AG
Konzernverwaltung RP Patentabteilung
D-5090 Leverkusen 1 Bayerwerk (DE)**

(72) Erfinder : **Frank, Walter
Doerperhofstrasse 14
D-4150 Krefeld (DE)**
Erfinder : **Beñdszus, Otto
Breitestrasse 92
D-4150 Krefeld (DE)**
Erfinder : **Traenckner, Hans-Joachim, Dr.
Wedelstrasse 46
D-4150 Krefeld (DE)**
Erfinder : **Freier, Hans-Joachim, Dr.
Campendonkstrasse 5
D-4150 Krefeld (DE)**

**Beschreibung**

Die vorliegende Erfindung betrifft photopolymerisierbare Polyesterharze, die sich zur Herstellung gut schleifbarer Überzüge eignen, ein Verfahren zur Herstellung dieser Polyesterharze und ihre Verwendung als Lackbindemittel.

Unter den Lacken auf Basis ungesättigter Polyesterharze unterschiedet man nach Zusammensetzung und Trocknungs- bzw. Härtungsmechanismus zwei Typen:

1. Paraffinhaltige Polyesterharze scheiden vor oder während der Gelierung an der Oberfläche eine Paraffinschicht ab, welche die tiefer liegenden Lackschichten vor der inhibierenden Wirkung des Sauerstoffs der Luft schützt, der andernfalls eine permanente Klebrigkeit der Lackoberfläche verursachen würde. Werden hochglänzende Lackierungen erwünscht, muß die Paraffinschicht in einem zusätzlichen Arbeitsgang entfernt werden.

2. Polyester für lufttrocknende Polyesterharze enthalten einkondensierte Reste von Polyalkylenglykolen, Benzylethern oder β,γ-ethylenisch ungesättigten Ethern (DE-AS-1 024 654, 1 054 620). Die Härtung von Lackfilmoberflächen aus lufttrocknenden Polyesterharzen wird durch einen vom Sauerstoff der Luft ausgelösten Trocknungsmechanismus unterstützt, der von der Art der in den Polyester einkondensierten Ether abhängt: Polyalkylenglykole bewirken mäßige, β,γ-ethylenisch ungesättigte Ether gute Trocknung (defazet 31 (1977) Nr. 9, S. 370-371). Da die Lackierungen wegen der Abwesenheit von Paraffin glänzen, werden die der Rezeptur zugrundeliegenden Polyester auch « Glanzpolyester » genannt.

Die schnellen Lackierstraßen der Möbelindustrie arbeiten mittels Lichthärtung und sind zu diesem Zweck mit UV-Hochdruckstrahlern ausgerüstet. Für diese Anlagen haben sich paraffinhaltige Lacke als ungeeignet erwiesen, weil die von den Hochdruckstrahlern ausgehende Wärmeenergie die Ausbildung des schützenden Paraffinfilms verhindert. Die Lackierungen sind deshalb an der Oberfläche ungenügend ausgehärtet und deshalb nicht schleifbar.

Glanzpolyester härten unter Hochdruckstrahlern zwar schnell, doch wird eine zufiedenstellende Schleifbarkeit bei der Verarbeitung auf Lackierstraßen mit sehr kurzen Taktzeiten nicht erreicht: Das Schleifmaterial verklebt schnell, wird also schlecht ausgenutzt. Eine Nachhärtung bis zur vollen Schleifbarkeit ist erst nach Tagen abgeschlossen.

Nach bisherigen Erkenntnissen über die Oberflächenhärtung von Lacken auf Basis von Glanzpolyestern rangierten die Reste β,γ-ethylenisch ungesättigter Ether bis jetzt eindeutig auf dem ersten Platz. Es war deshalb überaus überraschend, daß sich Polyester, die als lufttrocknende Komponente nur Polyalkylenglykolreste eingebaut enthalten — sofern sie die unten aufgeführten Bedingungen erfüllen — als hervorragende Grundlage für photopolymerisierbare ungesättigte Polyesterharze eignen und unter UV-Licht selbst in dünnsten Schichten innerhalb der in der Möbelindustrie üblichen kurzen Taktzeiten bis zur vollen Schleifbarkeit aushärten.

Gegenstand der Erfindung sind also photopolymerisierbare Mischungen enthaltend

a) 30 bis 70 Gewichtsteile mindestens eines α,β-ethylenisch ungesättigten Polyesters, der neben Resten α,β-ethylenisch ungesättigter Dicarbonsäuren bis zu 20 Mol-%, bezogen auf die ungesättigte Säurekomponente, Reste aliphatischer gesättigter Dicarbonsäuren mit 4 bis 10 C-Atomen oder cycloaliphatischer oder aromatischer Dicarbonsäuren mit 8 bis 10 C-Atomen enthalten kann,

b) 30 bis 70 Gewichtsteile mindestens eines mit a) copolymerisierbaren ungesättigten Monomeren,

c) 0,5 bis 4,0, vorzugsweise 1,0 bis 3,0, Gewichtsteile mindestens eines Photoinitiators und gegebenenfalls

d) weiterer üblicher Zusätze,

dadurch gekennzeichnet, daß Polyester a) mindestens 28, vorzugsweise mindestens 30, Gew.-% Reste α,β-ethylenisch ungesättigter Dicarbonsäuren, insbesondere Malein- und/oder Fumarsäurereste, 30 bis 50, vorzugsweise 33 bis 45, Gew.-% Polyalkylenglykolreste mit einem mittleren Molekulargewicht von 300 bis 600, vorzugsweise 350 bis 500, und gegebenenfalls bis zu 42, vorzugsweise bis zu 37, Gew.-% kurzkettiger Alkoholreste und anderer Carbonsäurereste enthält, wobei sich die Prozentangaben jeweils auf Polyester a) beziehen.

Besonders bevorzugte Polyester a) für die erfindungsgemäßen ungesättigten Polyesterharze enthalten 30 bis 40 Gew.-% Malein- und/oder Fumarsäurereste, 30 bis 45 Gew.-% Polyalkylenglykolreste mit einem mittleren Molekulargewicht von 350 bis 500 und 15 bis 40 Gew.-% Ethylen-Propylenglykolreste und andere Dicarbonsäurereste.

Weiterer Gegenstand der Erfindung ist eine Verfahren zur Herstellung dieser Mischungen, dadurch gekennzeichnet, daß man die Polyesterausgangskomponenten langsam auf 170 bis 210 °C erhitzt, das abgespaltene Reaktionswasser durch einen Inertgasstrom herausschleppt und so lange weiter erhitzt, bis das gewünschte Molekulargewicht, die gewünschte Viskosität oder die gewünschte Säurezahl erreicht, ist, mit Hydrochinon oder einem anderen handelsüblichen Stabilisatoi stabilisiert, und den so erhaltenen Polyester a) mit den Komponenten b), c) und ggf. d) mischt.

Weiterer Gegenstand der Erfindung ist die Verwendung der erfindungsgemäßen Mischungen als Lackbindemittel.

Aus der GB 1 131 617 sind zwar photopolymerisierbare ungesättigte Polyesterharze bekannt, deren Polyester anstelle von β,γ-ethylenisch ungesättigten Etherresten Polyalkylenglykolreste enthalten. Ein hoher Doppelbindungsgehalt der Polyester wird jedoch in der GB 1 131 617 nicht empfohlen. Ein Zusammenhang zwischen Doppelbindungsgehalt, der Abwesenheit β,γ-ethylenisch ungesättigter Etherreste, der Anwesenheit von Polyalkylenglykolresten und der Schleifbarkeit der Überzüge kann dieser Literaturstelle nicht entnommen werden.

Neben Maleinsäure- und Fumarsäureresten können die Polyester a) noch Reste anderer α,β-ethylenisch ungesättigter Dicarbonsäuren enthalten.

Beispiele aliphatischer gesättigter Dicarbonsäuren mit 4 bis 10 C-Atomen oder cycloaliphatischer oder aromatischer Dicarbonsäuren mit 8-10 C-Atomen sind o-Phthalsäure, Tetrahydrophthalsäure, Hydroxibernsteinsäure und Norbornensäure. Da die Mitverwendung solcher Säuren die Schleifbarkeit der Lackfilme beeinträchtigt und während der Polyesterherstellung ein Teil der Ethylendicarbonsäuren durch Nebenreaktionen zu gesättigten Dicarbonsäuren reagieren, werden zur Polyesterherstellung vorzugsweise keine anderen als nur Fumar- und/oder Maleinsäure bzw. deren Derivate eingesetzt. Der Gehalt an α,β-ethylenisch ungesättigten Dicarbonsäureresten kann durch Mercaptananlagerung quantitativ bestimmt werden ; vgl. Analyt. Chemie 21, 1073 (1949).

Für die Herstellung der Polyester a) bevorzugte Polyalkylenglykole sind Polyethylen- und Polypropylenglykole. Neben diesen Polyalkylenglykolen können zur Herstellung der Polyester a) noch andere Hydroxiverbindungen, vorzugsweise Polyhydroxiverbindungen mit 2 bis 8 C-Atomen und 2 bis 4, vorzugsweise 2, Hydroxylgruppen eingesetzt werden. Da langkettige Polyalkylenglykole, langkettige Diole und Polyhydroxylverbindungen mit mehr als 2 OH-Gruppen bereits in kleinen Mengen die Schleifbarkeit vermindern, enthalten bevorzugte Polyester a) neben Malein- bzw. Fumarsäureresten und den oben definierten Polyalkylenglykoleinheiten bis zu 42, vorzugsweise bis zu 37 Gew.-% kurzkettige Diolreste, vorzugsweise Ethylenglykol- und/oder Propylenglykolreste und andere Dicarbonsäurereste.

Die Säurezahlen der Polyester sollen 1 bis 50, vorzugsweise 10 bis 40 und die OH-Zahlen 10 bis 80, vorzugsweise 15 bis 70 und die als Zahlenmittel bestimmten Molekulargewichte 300 bis 5 000, vorzugsweise 500 bis 2 000, betragen (dampfdruckosmometrisch in Dioxan und Aceton bestimmt, wobei bei differierenden Werten der niedrigere Wert als korrekt angesehen wird).

Bevorzugte mit den ungesättigten Polyestern a) copolymerisierbare Monomere b) sind Vinyl- und Vinylidenverbindungen, die bevorzugt α-substituierte Vinylgruppen oder β-substituierte Allylgruppen tragen, bevorzugt Styrol ; aber auch beispielsweise kernchlorierte und -alkylierte bzw. -alkenylierte Styrole, wobei die Alkylgruppen 1-4 Kohlenstoffatome enthalten, können, z. B. Vinyltoluol, Divinylbenzol, α-Methylstyrol, tert.-Butylstyrol, Chlorstyrole ; Vinylester von Carbonsäuren mit 2-6 Kohlenstoffatomen, bevorzugt Vinylacetat ; Vinylpyridin, Vinylpyrrolidon, Vinylnaphthalin, Vinylcyclohexan, die Ester der Acrylsäure und/oder Methacrylsäure (vorzugsweise Vinyl-, Allyl-, und Methallylester) mit 1-4 Kohlenstoffatomen in der Alkoholkomponente, ihre Amide, Maleinsäureanhydrid, -halb- und -diester mit 1-4 Kohlenstoffatomen in der Alkoholkomponente, -halb- und -diamide oder cyclische Imide wie N-Methylmaleinimid oder N-Cyclohexylmaleinimid ; Allylverbindungen wie Allylbenzol und Allylester wie Allylacetat, Phthalsäurediallylester, Isophthalsäurediallylester, Fumarsäurediallylester, Allylcarbonate, Diallylcarbonate, Triallylphosphat und Triallylcyanurat.

Um die Polyesterharze (a + b) vor unerwünschter vorzeitiger Polymerisation zu bewahren, empfiehlt es sich, bereits bei der Herstellung der ungesättigten Polyester 0,001-0,1 Gew.-%, bezogen auf die Komponente a), Polymerisationsinhibitoren oder Antioxidantien zuzusetzen.

Bevorzugte Photoinitiatoren sind die üblicherweise eingesetzten Verbindungen, beispielsweise Benzophenon sowie ganz allgemein aromatische Ketoverbindungen, die sich vom Benzophenon ableiten, wie Alkylbenzophenone, halogenmethylierte Benzophenone gemäß der DE-OS-1 949 010, Michlers Keton, Anthron, halogenierte Benzophenone. Ebenfalls wirksame Photoinitiatoren stellen Anthrachinon und zahlreiche seiner Derivate dar, beispielsweise β-Methylanthrachinon, tert.-Butylanthrachinon und Anthrachinoncarbonsäureester, ebenso Oximester gemäß der DE-OS-1 795 089.

Besonders bevorzugte Photoinitiatoren sind Benzoin und seine Derivate (vgl. DE-AS-1 694 149, DE-OS-1 769 168, 1 769 853, 1 769 854, 1 807 297, 1 807 301, 1 919 678).

Weitere besonders bevorzugte Photoinitiatoren sind Benzilketale, wie z. B. Benzildimethylketal, und Hydroxialkylphenone, wie z. B. 2-Hydroxi-2-methyl-1-phenylpropan-1-on.

Weitere geeignete Photoinitiatoren sind der Monographie von J. Korsar, Light-Sensitive Systems, J. Wiley & Sons, New York-London-Sydney 1965, zu entnehmen.

Die erfindungsgemäßen Polyesterharze können als weitere Zusätze d) neben üblichen Inhibitoren, wie p-Benzochinon, Hydrochinon, 3-Methylbrenzcatechin oder Metallverbindungen in den bekannten Mengen geringe Mengen an üblichen Träger- und Füllstoffen sowie Thixotropiermitteln, wie Glasfasern, synthetischen Fasern, Kieselsäure und Talkum enthalten.

Die erfindungsgemäßen Polyesterharze können mittels UV-Licht oder in Gegenwart von Radikale liefernden Substanzen, wie thermischen Polymerisationsinitiatoren, gehärtet werden.

Die Photopolymerisation bis zur vollen Schleifbarkeit der Beschichtungen erfolgt am besten unter energiereichen Hochdruckstrahlern (Quecksilberdampflampen). Energiearme Leuchtstofflampen sind zwar verwendbar, jedoch ist die damit erzielte Härtungsgeschwindigkeit für die kurztaktige Möbelfertigung selten ausreichend.

Unter Dicarbonsäureresten werden im Sinne der Erfindung die um 2 Hydroxylgruppen verminderten

3

Dicarbonsäuren —CO—R—CO—, unter Polyalkylenglykol- bzw. Glykolresten die um 2 Wasserstoffatome verminderten Diole —O—R—O— verstanden.

Die in den nachfolgenden Beispielen genannten Prozentangaben beziehen sich, soweit nicht anders angegeben, auf das Gewicht.

Beispiele

1. Zusammensetzung der Polyesterharze

| Polyester Reste | A (erfindungs- gemäß) Mol | B (erfindungs- gemäß) Mol | C (Vergleich) Mol |
|---|---|---|---|
| Maleinsäure | 1 | 1.0 | 0.7 |
| Phthalsäure | — | — | 0.3 |
| Ethylenglykol | 0.75 | — | — |
| Propylenglykol | — | 0.80 | 0.80 |
| Polyethylenglykol (Molekulargewicht 400) | 0.25 | 0.20 | 0.20 |
| Kennzahlen Säurezahl | 25 | 28 | 30 |
| Viskosität, gemessen als 65 %ige Lösung in Styrol bei 20 °C [m.Pas] | 1 200 | 1 350 | 1 300 |
| Anteil ungesättigter Dicarbonsäurereste [%] | 32.5 | 33.4 | 21.9 |
| Anteil Polyalkylenglykolreste [%] | 43.9 | 36.0 | 33.8 |

Die Herstellung der Polyester erfolgte nach Zusatz von 0,02 % Hydrochinon durch Schmelzkondensation unter Stickstoffatmosphäre bei einer Temperatur bis maximal 200 °C.

Nach Beendigung der Reaktion wurden die erhaltenen Polyester bei 100 °C 65 %ig in Styrol gelöst.

2. Polyesterharz gemäß Beispiel 1a der DE-AS-2 113 998 (Vergleich).

2 550 Gewichtsteile Fumarsäure und 451 Gewichtsteile Propylenglykol-1,2 wurden unter Überleiten von Stickstoff langsam auf 150 °C erhitzt. Bei dieser Temperatur gab man 1 441 Gewichtsteile Diethylenglykol, 941 Gewichtsteile Trimethylolpropan-diallylether, 428 Gewichtsteile Diethylenglykolmonobutylether und 0,34 Gewichtsteile Hydrochinon hinzu. Man erhöhte die Innentemperatur pro Stunde um 10° auf 180 °C und kondensierte bis zu einer Viskosität von 800 m.Pas, gemessen als 65 %ige Lösung in Styrol bei 20 °C und Säurezahl 25.

Der auf 100 °C abgekühlte Polyester wurde mit 0,01 % Hydrochinon versetzt und mit Styrol auf 69 % verdünnt.

Anteil ungesättigter Dicarbonsäurereste :    28,7 %
Anteil Polyalkylenglykolreste :

3. Polyesterharz gemäß GB 1 131 617, Beispiel II (Vergleich)

Aus 0,5 Mol Fumarsäure, 0,3 Mol Citraconsäureanhydrid, 0,3 Mol Adipinsäure, 0,4 Mol Polyethylenglykol mit einem Molekulargewicht von 200 und 0,6 Mol Polyethylenglykol mit einem Molekulargewicht von 300 werden dem Schmelzkondensationsverfahren — wie oben unter 1) beschrieben — unterworfen. Der erhaltene Polyester wurde zwecks fairen Vergleichs im Gegensatz zur GB 1 131 617 nicht in elastifizierenden Acrylsäureestern, sondern in Styrol gelöst (Festkörpergehalt : 65 %).

Säurezahl 20 ; Viskosität 1 450 mPas, gem. 65 %ig in Styrol bei 20 °C.

Anteil ungesättigter Dicarbonsäurereste :    16,2 %
Anteil Polyalkylenglykolreste    70,7 %

4. Anwendung

Die erhaltenen Polyesterharze wurden mit 2,5 % Benzoinisopropylether versetzt und die so erhaltenen Beschichtungsmittel in 250 μm Schichtstärke auf grundierte Hölzer aufgetragen. Gehärtet wurde unter Quecksilberhochdruckstrahler (Leistung 30 Watt/cm) 30 Sek. im Abstand von 15 cm. Die nachstehende Tabelle verdeutlicht die überlegene Schleifbarkeit der erfindungsgemäßen Beschichtungsmittel.

## 0 037 463

| Basispolyester | Erfindungsgemäß | | Vergleiche | | |
|---|---|---|---|---|---|
| | 1 A | 1 B | 1 C | 2 | 3 |
| Schleifbarkeit nach Verlassen der UV-Straße | sehr gut | sehr gut | mäßig | mäßig | nicht (rollt) |

**Patentansprüche**

1. Photopolymerisierbare Mischungen enthaltend

a) 30 bis 70 Gewichtsteile mindestens eines α,β-ethylenisch ungesättigten Polyesters, der neben Resten α,β-ethylenisch ungesättigter Dicarbonsäuren bis zu 20 Mol-%, bezogen auf die ungesättigte Säurekomponente, Reste aliphatischer gesättigter Dicarbonsäuren mit 4 bis 10 C-Atomen oder cycloaliphatischer oder aromatischer Dicarbonsäuren mit 8 bis 10 C-Atomen enthalten kann,

b) 30 bis 70 Gewichtsteile mindestens eines mit a) copolymerisierbaren ungesättigten Monomeren,

c) 0,5 bis 4,0 Gewichtsteile mindestens eines Photoinitiators und gegebenenfalls

d) weitere übliche Zusätze,

dadurch gekennzeichnet, daß Polyester a) mindestens 28 Gew.-% Malein- und/oder Fumarsäurereste, 30 bis 50 Gew.-% Polyalkylenglykolreste mit einem mittleren Molekulargewicht von 300 bis 600 und gegebenenfalls bis zu 42 Gew.-% kurzkettiger Alkoholreste und anderer Carbonsäurereste enthält, wobei sich die Prozentangaben jeweils auf Polyester a) beziehen.

2. Mischungen nach Anspruch 1, dadurch gekennzeichnet, daß die Polyester a) mindestens 30 Gew.-% Reste α,β-ethylenisch ungesättigter Dicarbonsäuren enthalten.

3. Mischungen nach Ansprüchen 1-2, dadurch gekennzeichnet, daß die Polyester a) 33 bis 45 Gew.-% Polyalkylenglykolreste enthalten.

4. Mischungen nach Ansprüchen 1-3, dadurch gekennzeichnet, daß die Polyester a) Polyalkylenglykolreste mit einem mittleren Molekulargewicht von 350 bis 500 enthalten.

5. Mischungen nach Ansprüchen 1-4, dadurch gekennzeichnet, daß die Polyester a) neben den Resten α,β-ethylenisch ungesättigter Dicarbonsäuren und den Polyalkylenglykolresten bis zu 37 Gew.-% anderer Alkohol- bzw. Carbonsäurereste enthalten.

6. Mischungen nach Ansprüchen 1-5, dadurch gekennzeichnet, daß die Polyester a) 30 bis 40 Gew.-% Malein- und/oder Fumarsäurereste, 30 bis 45 Gew.-% Polyalkylenglykolreste mit einem mittleren Molekulargewicht von 350 bis 500 und 15 bis 40 Gew.-% Ethylen- und/oder Propylenglykolreste enthalten.

7. Verfahren zur Herstellung der Mischungen nach Ansprüchen 1-6, dadurch gekennzeichnet, daß man die Polyesterausgangskomponenten langsam auf 170 bis 210 °C erhitzt, das abgespaltene Reaktionswasser durch einen Inertgasstrom herausschleppt und so lange weiter erhitzt, bis das gewünschte Molekulargewicht, die gewünschte Viskosität oder die gewünschte Säurezahl erreicht ist, mit Hydrochinon oder einem anderen handelsüblichen Stabilisator stabilisiert, und den so erhalten Polyester a) mit den Komponenten b), c) und ggf. d) mischt.

8. Verwendung der Mischungen nach Ansprüchen 1-6 als Lackbindemittel.

**Claims**

1. Photopolymerisable mixtures containing

a) 30 to 70 parts by weight of at least one, α,β-ethylenically unsaturated polyester which can contain, in addition to radicals of α,β-ethylenically unsaturated dicarboxylic acids, up to 20 mol %, based on the unsaturated acid component, of radicals of aliphatic saturated dicarboxylic acids having 4 to 10 C atoms or of cycloaliphatic or aromatic dicarboxylic acids having 8 to 10 C atoms,

b) 30 to 70 parts by weight of at least one unsaturated monomer which can be copolymerised with a),

c) 0.5 to 4.0 parts by weight of at least one photoinitiator and, optionally,

d) other customary additives,

characterised in that polyester a) contains at least 28 % by weight of maleic and/or fumaric acid radicals, 30 to 50 % by weight of polyalkylene glycol radicals having an average molecular weight of 300 to 600 and, optionally, up to 42 % by weight of short-chain alcohol radicals and other carboxylic acid radicals, the percentages being based in each case on polyester a).

2. Mixtures according to claim 1, characterised in that polyesters a) contain at least 30 % by weight of radicals of α,β-ethylenically unsaturated dicarboxylic acids.

3. Mixtures according to claims 1-2, characterised in that polyesters a) contain 33 to 45 % by weight of polyalkylene glycol radicals.

4. Mixtures according to claims 1-3, characterised in that polyesters a) contain polyalkylene glycol radicals having an average molecular weight of 350 to 500.

5

**0 037 463**

5. Mixtures according to claims 1-4, characterised in that polyesters a) contain, in addition to the radicals of α,β-ethylenically unsaturated dicarboxylic acids and the polyalkylene glycol radicals, up to 37 % by weight of other alcohol or carboxylic acid radicals.

6. Mixtures according to claims 1-5, characterised in that polyesters a) contain 30 to 40 % by weight of maleic and/or fumaric acid radicals, 30 to 45 % by weight of polyalkylene glycol radicals having an average molecular weight of 350 to 500 and 15 to 40 % by weight of ethylene and/or propylene glycol radicals.

7. Process for the production of the mixtures according to claims 1-6, characterised in that the polyester starting components are heated slowly to 170 to 210 °C, the reaction water split off is entrained out by an inert gas stream and heating is continued until the required molecular weight, the required viscosity or the required acid number is reached, the reaction mixture is stabilised with hydroquinone or another commercial stabiliser and the polyester a) thus obtained is mixed with components b), c) and, optionally, d).

8. Use of the mixtures according to claims 1-6 as lacquer binders.

## Revendications

1. Mélanges photopolymérisables contenant

a) 30 à 70 parties en poids d'au moins un polyester à insaturation α,β-éthylénique, qui peut contenir à côté de restes d'acides dicarboxyliques à insaturation α,β-éthylénique, jusqu'à 20 moles %, par rapport au composant acide insaturé, de restes d'acides dicarboxyliques aliphatiques saturés ayant 4 à 10 atomes de carbone ou d'acides dicarboxyliques cycloaliphatiques ou aromatiques ayant 8 à 10 atomes de carbone,

b) 30 à 70 parties en poids d'au moins un monomère insaturé copolymérisable avec a),

c) 0,5 à 4,0 parties en poids d'au moins un photoinitiateur et, le cas échéant,

d) d'autres additifs classiques,

caractérisés en ce que le polyester a) contient au moins 28 % en poids de restes d'acide maléique et/ou d'acide fumarique, 30 à 50 % en poids de restes de polyalkylène-glykol ayant un poids moléculaire moyen de 300 à 600 et, le cas échéant, jusqu'à 42 % en poids de restes d'alcool à chaîne courte et d'autres restes d'acides carboxyliques, les indications de pourcentage se rapportant, dans chaque cas, au polyester a).

2. Mélanges suivant la revendication 1, caractérisés en ce que les polyesters a) contiennent au moins 30 % en poids de restes d'acides dicarboxyliques à insaturation α,β-éthylénique.

3. Mélanges suivant les revendications 1-2, caractérisés en ce que les polyesters a) contiennent 33 à 45 % en poids de restes de polyalkylène-glycol.

4. Mélanges suivant les revendications 1-3, caractérisés en ce que les polyesters a) contiennent des restes de polyalkylène-glycol ayant un poids moléculaire moyen de 350 à 500.

5. Mélanges suivant les revendications 1-4, caractérisés en ce que les polyesters a) contiennent, à côté des restes d'acides dicarboxyliques à insaturation α,β-éthylénique et des restes de polyalkylène-glycol, jusqu'à 37 % en poids d'autres restes d'alcools et d'acides carboxyliques.

6. Mélanges suivant les revendications 1-5, caractérisés en ce que les polyesters a) contiennent 30 à 40 % en poids de restes d'acide maléique et/ou d'acide fumarique, 30 à 45 % en poids de restes de polyalkylène-glycol ayant un poids moléculaire moyen de 350 à 500, et 15 à 40 % en poids de restes d'éthylène-glycol et/ou de propylène-glycol.

7. Procédé de production des mélanges suivant les revendications 1 à 6, caractérisé en ce qu'on chauffe lentement à 170-210 °C les composants de départ du polyester, on chasse l'eau de réaction libérée par entraînement dans un courant de gaz inerte et on continue de chauffer jusqu'à ce que le poids moléculaire désiré, la viscosité désirée ou l'indice d'acide désiré aient été atteints, on stabilise à l'hydroquinone ou avec un autre agent stabilisant du commerce, et on mélange le polyester a) ainsi obtenu avec les composants b), c) et, le cas échéant, d).

8. Utilisation des mélanges suivant les revendications 1-6, comme liants pour vernis.

6